(19) Europäisches Patentamt

European Patent Office

Office européen des brevets

(11) **EP 0 921 424 A1**

(12) **DEMANDE DE BREVET EUROPEEN**

(43) Date de publication:
09.06.1999 Bulletin 1999/23

(51) Int. Cl.$^6$: **G02B 6/293**, G02B 6/124, H04B 10/24

(21) Numéro de dépôt: 98403079.1

(22) Date de dépôt: 08.12.1998

(84) Etats contractants désignés:
AT BE CH CY DE DK ES FI FR GB GR IE IT LI LU MC NL PT SE
Etats d'extension désignés:
AL LT LV MK RO SI

(30) Priorité: 08.12.1997 FR 9715477

(71) Demandeur: FRANCE TELECOM
75015 Paris (FR)

(72) Inventeurs:
• Bruno, Adrien
  91120 Palaiseau (FR)
• Win, Pascal
  35690 Aigne (FR)
• Rigny, Arnaud
  35580 Guignen (FR)

(74) Mandataire:
Texier, Christian et al
Cabinet Regimbeau,
26, Avenue Kléber
75116 Paris (FR)

(54) **Dispositif d'échange de signaux optiques à travers une fibre optique**

(57) La présente invention concerne un dispositif d'échange de signaux optiques à travers une fibre optique (200), comportant un composant optique (100) du type à spectrographe à réseau (1000) de guides d'onde, un émetteur (400) et un récepteur (500) de signaux optiques, un canal d'un des coupleurs du composant optique étant relié à la fibre optique (200), un premier (150) et un second (140) canal de l'autre coupleur (120) du composant optique étant reliés respectivement à une entrée du récepteur (500) et à une sortie de l'émetteur (400), et ledit autre coupleur (120) comportant un troisième canal (130) relié à un port d'un autre composant optique (300) du dispositif.

FIG.1

EP 0 921 424 A1

**Description**

La présente invention concerne les dispositifs qui sont à la fois émetteur et récepteur de signaux optiques à travers une fibre optique.

On souhaite de nos jours utiliser les fibres optiques dans des applications de plus en plus nombreuses et variées.

On souhaite ainsi pouvoir véhiculer à travers une même fibre optique, des signaux de différentes natures, comme des signaux de téléphone, des signaux de télévision, ou encore des signaux porteurs de données informatiques. De manière connue, aux signaux de différentes natures, véhiculés dans une même fibre, sont attribuées des longueurs d'onde qui leur sont propres, de manière à pouvoir différencier ces signaux les uns des autres.

Il est donc nécessaire de pouvoir véhiculer, dans une même fibre optique, de manière simultanée, de multiples signaux, y compris des signaux ayant des sens de propagation opposés, et il s'avère nécessaire de pouvoir réaliser, à une extrémité de la fibre optique, plusieurs opérations différentes.

Une première opération est la gestion de communications bidirectionnelles à travers la fibre optique, comme par exemple une conversation téléphonique.

Une seconde opération est une séparation de plusieurs signaux arrivant sur cette extrémité, selon leur longueur d'onde.

En effet, en plus de communications bidirectionnelles, il peut être prévu à cette extrémité de la fibre de recevoir plusieurs signaux ayant des longueurs d'onde différentes, comme par exemple un signal de télévision et un signal porteur de données informatiques.

Une troisième opération est un multiplexage de différents signaux. Cette opération est nécessaire lorsque l'on souhaite injecter dans la fibre différents signaux de nature différente.

En ce qui concerne la première opération, on a proposé, dans 〈〈 1,31 -1,55 μm Phased-Array Demultiplexer on InP 〉〉 IEEE Photonics Technology Letters, Vol. 8, N° 5, Mai 1996, R. Mestric, H. Bissessur, B. Martin et A. Pinquier, d'utiliser un spectrographe à réseau de guides d'onde (également appelé 〈〈 phasar 〉〉), ayant un canal 〈〈 d'entrée 〉〉 sur un premier coupleur et deux canaux 〈〈 de sortie 〉〉 sur un second coupleur, et de relier ces deux canaux 〈〈 de sortie 〉〉 respectivement à un laser et à un photodétecteur.

Le canal d'entrée étant relié à une fibre optique, le phasar a pour rôle d'injecter dans cette fibre des signaux reçus par le phasar sur un premier canal 〈〈 de sortie 〉〉 et d'injecter, dans l'autre canal 〈〈 de sortie 〉〉, des signaux reçus à travers la fibre optique.

Ce dispositif est limité à deux longueurs d'onde relativement éloignées, c'est à dire égales à 1,33 et 1,55 μm, et ne permet pas de séparer des longueurs d'onde présentant entre elles une différence inférieure à 0,04 μm, comme ce serait pourtant souhaitable dans le cas de communications bidirectionnelles telles que des communications téléphoniques.

Ainsi, ce dispositif ne permet pas d'assurer des communications bidirectionnelles à 1,28 et 1,32 μm.

En ce qui concerne la première opération, on a également proposé, dans 〈〈 Horizontal directional coupler filter suitable for integration in a 1,3+/1,3- μm duplexer 〉〉, S. François, M.Filoche, F. Huet, S. Fouchet, G.Hervé-Gruyer, A.Ougazzaden, J.Brandon, N. Bouadma, M .Carré, et A.Carenco, Electronics Letters, Vol. 31, No.23, 9 novembre 1995, de réaliser un coupleur directionnel à méandre, qui permet de gérer des communications bidirectionnelles dans une fenêtre de télécommunications située autour d'une longueur d'onde de 1,3 μm. Afin de séparer deux longueurs d'onde respectivement 1,28 et 1,32 μm, avec une diaphotie optimale entre des bras du coupleur, on choisit dans ce cas d'utiliser une fonction de Hamming pour faire varier un coefficient de couplage le long d'une direction de propagation.

Les coupleurs directionnels présentent l'inconvénient majeur, pour des tailles de dispositifs suffisamment petites pour être acceptables, de ne permettre d'obtenir de bonnes diaphoties que sur des zones de longueur d'onde particulièrement étroites. Pour de nombreuses applications nécessitant des dispositifs d'échange de signaux optiques, ces dispositifs ne permettent donc pas de travailler sur des zones de longueur d'onde suffisamment larges.

Par ailleurs, ces dispositifs présentent l'inconvénient d'être particulièrement fastidieux à réaliser.

En ce qui concerne la seconde opération, on sait utiliser un phasar, dont un canal d'entrée est relié à la fibre optique, et des canaux de sortie sont reliés à des récepteurs, le phasar étant adapté à séparer les signaux de longueurs d'onde différentes arrivant sur le phasar par la fibre, et à les transmettre aux récepteurs correspondants, reliés aux canaux de sortie.

On a également proposé, dans 〈〈 Demonstration and application of a monolithic two-PONs-in-one device 〉〉, 22nd European Conference on Optical Communication, Yuan P.Li, L .G. Cohen, C.H.Henry, E.J.Laskowski, et M.A. Cappuzzo, Lucent Technologies, Bell Laboratories, un dispositif comportant des éléments de type Mach-Zender, permettant, à partir d'un signal multilongueur d'onde constitué de huit canaux à 1,5 μm et d'un canal à 1,3 μm, de subdiviser ce dernier et de démultiplexer le signal à 1,5 μm. Ce dispositif comporte huit libres de sortie, sur lesquelles sont fournies à chaque fois une partie du signal à 1,3 μm et un canal des huit canaux à 1,5μm.

Les dispositifs de type Mach-Zender présentent les mêmes inconvénients que les coupleurs bidirectionnels. Ils ne permettent d'obtenir de bonnes diaphoties que sur des zones de longueur d'onde particulièrement étroites, et sont particulièrement fastidieux à réaliser.

Ces différents dispositifs présentent par ailleurs l'inconvénient majeur de n'assurer qu'une des trois opérations précédemment mentionnées et pouvant s'avérer nécessaire à une extrémité d'une fibre optique. Ainsi, ils ne permettent pas, à une même extrémité d'une fibre, d'assurer à la fois une communication bidirectionnelle et une séparation en longueur d'onde de signaux arrivant par la fibre, ou encore une communication bidirectionnelle et un multiplexage de signaux à injecter dans la fibre.

Par exemple, les dispositifs simples proposés jusqu'à présent ne permettent pas d'assurer à travers une même fibre optique la réception et l'émission de signaux téléphoniques, et simultanément la réception d'un signal de télévision.

Un but de la présente invention est de pallier à ces différents inconvénients et de proposer un dispositif simple de réalisation, apte à assurer, à une extrémité d'une fibre optique, ces différentes opérations.

Ces buts sont atteints selon la présente invention grâce à un Dispositif d'échange de signaux optiques à travers une fibre optique, comportant un composant optique du type à spectrographe à réseau de guides d'onde ayant deux coupleurs entre lesquels ledit réseau s'étend et des canaux s'étendant depuis les coupleurs vers l'extérieur du composant, ce dispositif comportant également un émetteur et un récepteur de signaux optiques, un canal d'un des coupleurs du composant optique étant relié à la fibre optique, un premier et un second canal de l'autre coupleur du composant optique étant reliés respectivement à une entrée du récepteur et à une sortie de l'émetteur, caractérisé en ce que ledit autre coupleur comporte un troisième canal relié à un port d'un autre composant optique du dispositif.

D'autres caractéristiques, buts et avantages de la présente invention apparaîtront à la lecture de la description qui va suivre et en regard des dessins annexés, donnés à titre d'exemples non limitatifs et sur lesquels :

- la ligure 1 représente une structure générale d'un dispositif conforme à la présente invention ;
- la figure 2 représente un coupleur de sortie conforme à l'état de la technique ;
- la figure 3 représente un coupleur de sortie conforme à l'invention ;
- la figure 4 représente une disposition géométrique de canaux de sortie, par rapport à différents intervalles spectraux libres prenant place dans un coupleur de sortie à trois canaux, d'un phasar conforme à l'invention ;
- la figure 5 représente une même disposition géométrique, où les intervalles spectraux libres ont été représentés l'un au dessus de l'autre ;
- la figure 6 représente les canaux de sortie des figures 4 et 5, disposés sur un axe représentatif de leur position réelle dans le coupleur de sortie ;
- la figure 7 représente une disposition géométrique de canaux de sortie, par rapport à différents intervalles spectraux libres prenant place dans un coupleur de sortie à quatre canaux, d'un phasar conforme à l'invention ;
- la figure 8 représente une même disposition géométrique, où les intervalles spectraux libres ont été représentés l'un au dessus de l'autre ;
- la figure 9 représente les canaux de sortie des figures 7 et 8, disposés sur un axe représentatif de leur position réelle dans le coupleur de sortie ;
- la figure 10 est une vue de côté d'un phasar présentant une géométrie de son réseau de guides conforme à l'invention ;
- la figure 11 représente une vue de côté d'un phasar présentant une géométrie de son réseau de guides conforme à l'invention, dans laquelle les guides décrivent un virage central supplémentaire ;
- la figure 12 est un tracé de puissances transmises par des canaux de sortie d'un phasar conforme à l'invention, en fonction de longueurs d'onde ;
- la figure 13 est un tracé conforme à celui de la figure 12 dans lequel différentes portions du tracé, correspondant chacune à un canal de sortie, ont été rassemblées pour faciliter la lecture du tracé ;
- la figure 14 est un tracé d'une diaphotie obtenue avec un phasar conforme à l'invention, en fonction de longueurs d'onde ;
- la figure 15 est une vue en coupe transversale d'une structure épitaxiée de réseau conforme à l'invention.

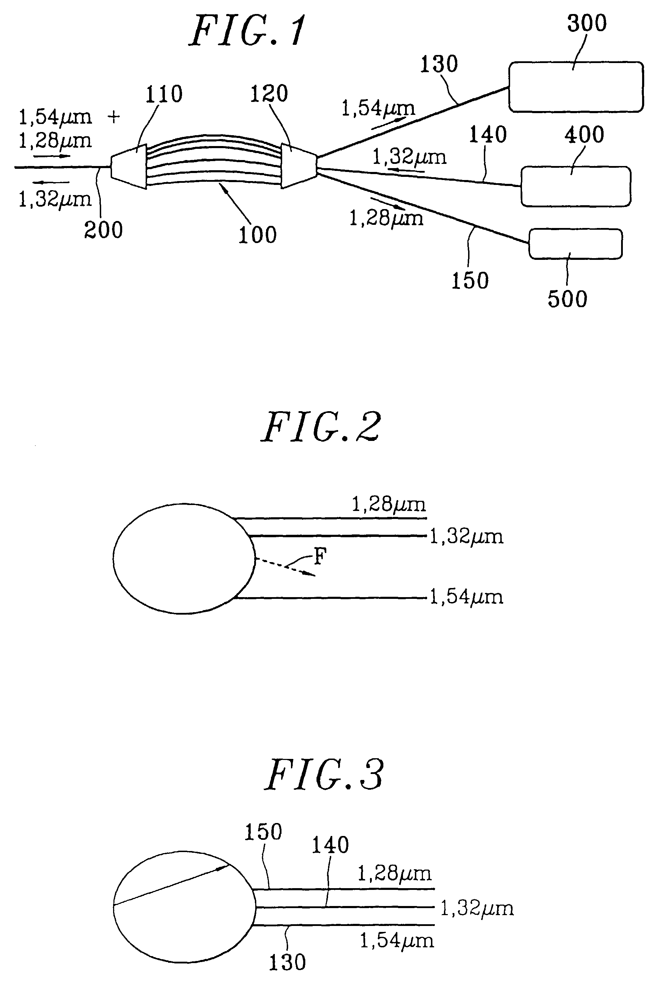

On a représenté, sur la figure 1, une vue d'ensemble d'un dispositif de communication optique conforme à l'invention. En partie central de la figure 1 est représenté un phasar 100. Ce phasar présente un coupleur d'entrée 110 relié à une fibre optique 200.

Cette fibre optique 200 est par exemple reliée à un réseau local de télécommunication optique, le dispositif d'ensemble de la figure 1 étant disposé dans une habitation. Le dispositif de la figure 1 est, par l'intermédiaire du réseau local, relié par exemple à un central téléphonique, à un centre de diffusion de signaux de télévision, ou encore à des ordinateurs situés dans d'autres habitations.

Ainsi, la fibre 200 est destinée à être parcourue simultanément par des signaux optiques ayant des sens opposés.

Le phasar 100 présente un deuxième coupleur 120. Ce coupleur 120 comporte trois canaux s'étendant vers l'extérieur du phasar.

Un premier canal 130 relie le coupleur 120 à un récepteur multicanal 300. Ce récepteur 300 est adapté pour recevoir des signaux ayant des longueurs d'ondes proches de 1,54 $\mu$m.

Un deuxième canal 140 relie le coupleur 120 à un émetteur de signaux optiques 400, qui émet des signaux optiques à une longueur d'onde égale à 1,32 $\mu$m.

Un troisième canal 150 relie le coupleur 120 à un second récepteur 500, qui, lui, est adapté à recevoir des signaux ayant une longueur d'onde de 1,28 μm.

Les inventeurs ont découvert qu'en réalisant un phasar 100 capable de séparer ou multiplexer en longueur d'onde au moins trois signaux ayant trois longueurs d'onde respectives différentes, il est possible d'utiliser un tel phasar pour injecter dans une fibre optique 200 un signal ayant une première de ces trois longueurs d'onde, et simultanément séparer deux autres signaux, ces deux signaux arrivant sur le phasar 100 par la fibre optique 200 et ayant deux autres de ces trois longueurs d'onde.

Ainsi, dans l'exemple de réalisation décrit ici, deux signaux optiques, l'un à 1,28 μm et l'autre à 1,54μm, arrivent simultanément sur le coupleur 110 à travers la fibre 200. Ces deux signaux sont séparés en longueurs d'onde par le phasar 100, et transmis respectivement aux récepteurs 300 et 500 à travers les canaux 130 et 150. Simultanément, l'émetteur 400 émet à travers le canal 140 un signal à 1,32 μm et le phasar 100 transmet, à travers son réseau de guides d'ondes et à travers le coupleur 110, ce signal à 1,32 μm dans la fibre optique 200.

Plus généralement, un phasar de type classique, propre à séparer un nombre n supérieur à 3 de signaux différents arrivant sur un canal d'un coupleur d'entrée, à travers une fibre optique, ces signaux ayant respectivement des longueurs d'onde $\lambda_1,....\lambda_n$, et propre à transmettre ces n signaux différents dans n canaux de sortie d'un coupleur de sortie, peut être relié par ces canaux de sortie à un ensemble de composants comprenant une multiplicité d'émetteurs et de récepteurs, chacun apte à émettre ou à recevoir un signal à une longueur d'onde correspondant au canal par lequel il est relié au coupleur de sortie du phasar. Les inventeurs ont découvert qu'un tel dispositif permet à ces émetteurs et à ces récepteurs d'émettre et de recevoir des signaux à leur longueur d'onde respective à travers le phasar et la fibre optique, sans que ces signaux n'interfèrent les uns avec les autres, ni dans le phasar, ni dans la fibre optique. De plus, ces émetteurs et ces récepteurs peuvent respectivement émettre et recevoir des signaux de manière simultanée.

Dans l'exemple de réalisation de la figure 1, chacun des trois éléments que sont le récepteur 300, l'émetteur 400 et le récepteur 500, reçoit ou émet un signal optique à une longueur d'onde qui lui est propre.

Le réseau local transmet au phasar 100, par la fibre 200, un signal entrant constitué de deux signaux ayant des longueurs d'onde respectivement égales aux longueurs d'onde de réception des récepteurs 300 et 500, c'est à dire 1,54 et 1,28 μm.

Le phasar réalise, à tout moment, une séparation de ce signal entrant en ces deux signaux ayant les longueurs d'onde des deux récepteurs 300 et 500, et transmet ces signaux séparés aux récepteurs 300, 500 correspondants.

Le récepteur 500 et l'émetteur 400 ont pour rôle, dans cet exemple de réalisation, d'assurer une communication bidirectionnelle à travers la fibre 200.

En d'autres termes, le phasar 100 assure une communication bidirectionnelle entre d'une part le réseau local et d'autre part l'ensemble émetteur 400/récepteur 500.

Simultanément, le phasar 100 reçoit de l'émetteur 400 un signal à 1,32 μm et injecte ce signal dans la fibre 200, en éloignement du phasar 100.

Ainsi, dans le cas où les signaux transmis à travers les canaux 140 et 150 sont des signaux téléphoniques, le récepteur 500 et l'émetteur 400 étant reliés respectivement à un haut parleur et à un microphone d'un téléphone, il est possible pour un utilisateur de transmettre un message en parlant dans le microphone tout en écoutant des paroles d'un correspondant dans le haut-parleur.

Il assure simultanément un prélèvement dans la fibre optique 200 d'un signal ayant la longueur d'onde propre au récepteur 300, c'est à dire 1,54 μm.

Dans un exemple de réalisation de l'invention, le signal à 1,54 μm reçu par le phasar 100 est un signal de télévision, et le récepteur 300 est une télévision. Ce phasar assurant alors simultanément une séparation du signal téléphonique à 1,28 μm, du signal de télévision à 1,54μm, et une injection dans la fibre 200 du signal téléphonique à 1,32μm, il est possible de converser au téléphone alors que la télévision est en fonctionnement.

Dans une variante de l'invention, le récepteur 300 est remplacé par un émetteur, par exemple un émetteur de signaux de télévision, ou un ordinateur transmettant des données informatiques.

Là encore, les inventeurs ont découvert qu'en adoptant un phasar du type apte à séparer des signaux de longueurs d'onde correspondant respectivement à celle du récepteur et des deux émetteurs à relier à l'extrémité de la fibre 200, il est possible à la fois de réaliser un multiplexage de signaux transmis au phasar 100 par les deux émetteurs, d'injecter ces signaux multiplexés dans la fibre optique 200, et, à la fois, de prélever un signal arrivant sur le phasar 100 par la fibre 200 et de le transmettre au récepteur.

Cette variante de l'invention est particulièrement adaptée pour un central d'émission de signaux télévisuels par exemple.

Dans l'exemple particulier de la figure 1, le phasar 100 emet dans la fibre optique un signal à 1,32μm et reçoit à travers cette fibre 200 des signaux de longueurs d'onde 1,28 et 1,54μm.

Bien entendu, l'invention ne se limite pas à ces trois valeurs de longueurs d'onde.

Dans de nombreuses applications, il est nécessaire de travailler dans des fenêtres de longueur d'onde distinctes, selon la nature des signaux. Ainsi, dans le cas de signaux téléphoniques, la fenêtre adoptée aujourd'hui est une fenêtre étroite située autour de 1,3μm. Les signaux téléphoniques se croisant dans une fibre optique ont, de manière préférentielle, des longueurs d'onde de 1,28 et 1,32 µm tandis que des signaux de type informatique ou télévisuel ont une longueur d'onde voisine de 1,5µm.

Dans de telles applications, il s'avère nécessaire de réaliser un phasar pouvant séparer trois signaux dont deux premiers signaux ont des longueurs d'onde très proches l'une de l'autre, comme ici des longueurs d'onde séparées de 0,04 µm, et dont un troisième signal est nettement plus éloigné en longueur d'onde des deux premiers signaux, comme ici un signal éloigné des deux premiers signaux d'environ 0,2 µm.

On décrira maintenant un phasar conforme à l'invention, et permettant de réaliser une séparation de tels signaux. Dans cet exemple de réalisation, les signaux à séparer ont des longueurs d'onde égales à 1,28 ; 1,32 et 1,54µm.

Dans un phasar classique, adapté à séparer trois signaux de longueurs d'onde différentes, on dispose, en sortie d'un coupleur de sortie, trois canaux adaptés à transmettre chacun un signal séparé. Chaque paire de canaux, parmi ces trois canaux, présente un espacement qui est proportionnel à la différence des longueurs d'onde transmises par chacun des deux canaux de cette paire. Ainsi, dans le cas d'un phasar classique, deux canaux de sortie transmettent des longueurs d'onde qui sont d'autant plus éloignées l'une de l'autre que ces canaux présentent en sortie du coupleur un espacement élevé entre eux.

Dans le cas où deux des trois longueurs d'onde à séparer sont très proches l'une de l'autre et la troisième très éloignée de ces deux premières, on obtient donc, avec un phasar de type classique, en sortie du coupleur de sortie, deux canaux très proches l'un de l'autre et un canal éloigné de ces deux premiers canaux.

De plus, il est nécessaire de respecter entre deux canaux de sortie d'un coupleur un écartement minimal, imposé généralement par des contraintes liées à une réalisation technologique de ces canaux. Un tel écartement minimal étant respecté entre les deux canaux correspondants aux deux premières longueurs d'onde les plus proches l'une de l'autre, et un couple de canaux présentant un écartement proportionnel à la différence des longueurs d'onde à véhiculer à travers ces canaux, le troisième canal correspondant à la longueur d'onde éloignée doit être disposé avec un écartement d'autant plus grand par rapport aux deux premiers canaux, que l'écartement minimal entre ces deux premiers canaux est élevé.

Ainsi, dans un phasar classique, on est contraint de disposer les deux premiers canaux sur un premier côté d'une zone d'expansion du coupleur et le troisième canal loin des deux premiers canaux, sur un côté opposé de cette même zone d'expansion.

Or, de manière connue, on observe dans un coupleur de sortie d'un phasar une répartition inhomogène d'énergie lumineuse.

Ainsi, une différence d'intensité est observée de manière générale entre une partie centrale et une partie latérale d'une zone d'expansion d'un coupleur. Un canal disposé au centre du coupleur de sortie d'un phasar transmet une intensité plus élevée qu'un canal disposé sur un côté de ce coupleur. Cette différence d'intensité entre le centre et le côté d'un coupleur est typiquement de 1 à 2 dB.

Il s'avère donc très désavantageux, en termes de transmission d'énergie, de placer des canaux en partie latérale d'un coupleur.

Le phasar selon l'invention, qui va être décrit maintenant, permet de rassembler autour du centre de la zone d'expansion d'un coupleur de sortie, des canaux de sortie correspondant à des longueurs d'onde réparties non uniformément, telles que 1,28, 1,32 et 1,54 µm. Un tel phasar permet ainsi de récolter un maximum d'intensité lumineuse sur tous ces canaux de sortie.

On a représenté, sur la figure 2, un coupleur de sortie d'un phasar de type classique, présentant des canaux de sortie correspondant aux longueurs d'onde 1,28, 1,32, 1,54 µm répartis en sortie de ce coupleur. On a également représenté sur cette figure 2 une flèche F, en tirets, correspondant à une direction d'un maximum d'intensité lumineuse à l'intérieur de ce coupleur.

On a représenté, sur la figure 3, un coupleur de sortie d'un phasar conforme à l'invention.

Comme on peut le voir, des canaux de sortie correspondant aux longueurs d'onde 1,28, 1,32 et 1,54 µm sont regroupés au centre du coupleur.

Le phasar 100 selon l'invention est réalisé en adoptant des longueurs de guides au sein du réseau de ce phasar, qui sont réparties de façon à obtenir deux ordres d'interférence au sein du coupleur de sortie 120. Ainsi, on obtient, au sein du coupleur de sortie 120, deux intervalles spectraux libres de longueurs d'onde centrales différentes. Plus précisément, en choisissant une répartition appropriée des longueurs des guides d'onde du réseau, on arrive à mettre en place dans le coupleur de sortie 120 deux intervalles spectraux libres ayant des longueurs d'onde centrales respectives proches de chacune des longueurs d'onde à séparer.

Dans l'exemple décrit ci-dessous, les longueurs d'onde centrales sont proches respectivement de 1,3 µm et de 1,5 µm.

On décrira par la suite comment déterminer une répartition des longueurs des guides permettant d'obtenir deux intervalles spectraux de longueur d'onde centrale choisie au sein du coupleur de sortie 120.

Une fois adoptées deux longueurs d'onde centrales, deux canaux de sortie sont placés en sortie du coupleur de sortie 120 de façon à transmettre des longueurs d'onde de 1,28 et 1,32 µm, ces deux premières longueurs d'onde appartenant à un premier intervalle spectral libre, et un canal de sortie est placé de façon à transmettre une longueur d'onde de 1,54 µm, cette longueur d'onde appartenant à un deuxième intervalle spectral libre. Ces longueurs d'onde étant chacune proches d'une longueur d'onde centrale d'un intervalle spectral libre, les canaux sont placés en partie centrale du coupleur. Dans l'exemple particulier décrit ici, le phasar selon l'invention fonctionne à l'ordre 8 pour les longueurs d'onde 1,28 et 1,32 μm et à l'ordre inférieur, c'est à dire à l'ordre 7 pour la longueur d'onde 1,54 μm.

Deux intervalles spectraux libres se superposant dans le coupleur de sortie, chacun de ces trois canaux est apte à recevoir une longueur d'onde appartenant à un premier intervalle spectral libre et une longueur d'onde appartenant au second intervalle spectral libre.

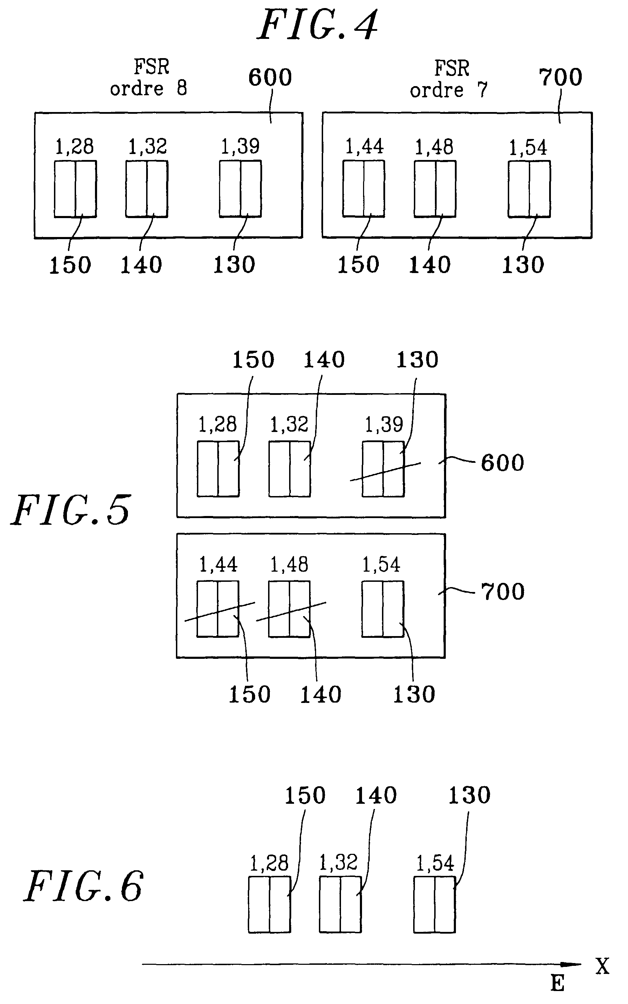

Sur la figure 4, on a schématisé chaque canal de sortie 130, 140, 150 correspondant aux canaux de la figure 1, par un rectangle comportant une séparation centrale sous forme d'un trait vertical. Sur la figure 4, chacun de ces trois canaux a été représenté deux fois. Une première fois à l'intérieur d'un rectangle 600 représentant un premier intervalle spectral libre correspondant à l'ordre 8, et une seconde fois à l'intérieur d'un rectangle 700 symbolisant un second intervalle spectral libre correspondant à l'ordre 7. Au dessus de chaque rectangle schématisant un canal, est inscrite une valeur de longueur d'onde. Cette valeur est la valeur de la longueur d'onde que le phasar est apte à séparer et à envoyer sur le canal considéré, au sein de l'intervalle spectral libre considéré. Ainsi, le canal 150 est positionné en sortie du coupleur 120 de façon à recevoir une longueur d'onde de 1,28 μm dans le premier intervalle spectral libre 600, et une longueur d'onde de 1,44 μm dans le second intervalle spectral libre 700. De même, le canal 140 est positionné de façon à recevoir, dans le premier intervalle spectral libre 600, la longueur d'onde 1,32 μm et, dans le second intervalle spectral libre 700, la longueur d'onde 1,48 μm. Enfin, le canal 130 est positionné de façon à recevoir, dans le premier intervalle spectral libre 600, une longueur d'onde de 1,39 μm, et dans le second intervalle spectral libre 700, une longueur d'onde de 1,54 μm. Les canaux 130, 140 et 150 sont, sur la figure 4, espacés entre eux proportionnellement à l'espacement réel qu'ils présentent entre eux en sortie du coupleur 120.

Sur la figure 5, on a représenté l'un au dessus de l'autre les intervalles spectraux libres 600 et 700 et, à l'intérieur de ces intervalles spectraux libres 600 et 700, chacun des canaux 130, 140 et 150.

Pour chacun des canaux 130, 140, 150, un des deux rectangles représentant ce canal a été rayé par un trait transversal. Le fait que ce rectangle soit ainsi rayé transversalement signifie que la longueur d'onde que ce canal est apte à transmettre dans l'intervalle spectral libre considéré n'a pas d'intérêt particulier pour l'application décrite.

En effet, dans l'exemple de réalisation de la figure 1, les signaux véhiculés à travers la fibre optique 200 ne se répartissent que sur trois longueurs d'onde, les longueurs d'onde 1,28, 1,32 et 1,54 μm . Ainsi, le canal 130 a été rayé par un trait transversal au sein de l'intervalle spectral libre 600. En effet, le récepteur 300 relié au deuxième coupleur par le canal 130, ne recevra qu'un signal de longueur d'onde 1,54 μm, puisqu'aucun signal à 1,39 μm ne traverse le dispositif dans son ensemble. La longueur d'onde qu'il est apte à véhiculer au sein du premier intervalle 600 est donc sans importance.

Il en est de même pour les canaux 140 et 150 puisque pour chacun de ces canaux, l'une des longueurs d'onde qu'ils sont adaptés à transmettre ne prend pas place à l'intérieur du dispositif de la figure 1, et en particulier, n'est pas véhiculée dans la fibre 200.

Ainsi, chaque canal est placé dans le coupleur en ne tenant compte que d'un seul intervalle spectral libre, l'intervalle spectral libre ayant une longueur d'onde centrale la plus proche de celle que ce canal est destiné à véhiculer. Ainsi, les canaux 140 et 150 sont placés en ne tenant compte que de la longueur d'onde centrale proche de 1,3 μm, c'est à dire de la disposition du premier intervalle spectral libre. A l'inverse, le canal 130 destiné à véhiculer une longueur d'onde de 1,54 μm est placé dans le coupleur 120 en ne tenant compte que de la valeur de la longueur d'onde centrale du deuxième intervalle spectral libre, celui correspondant à des longueurs d'onde proches de 1,5 μm.

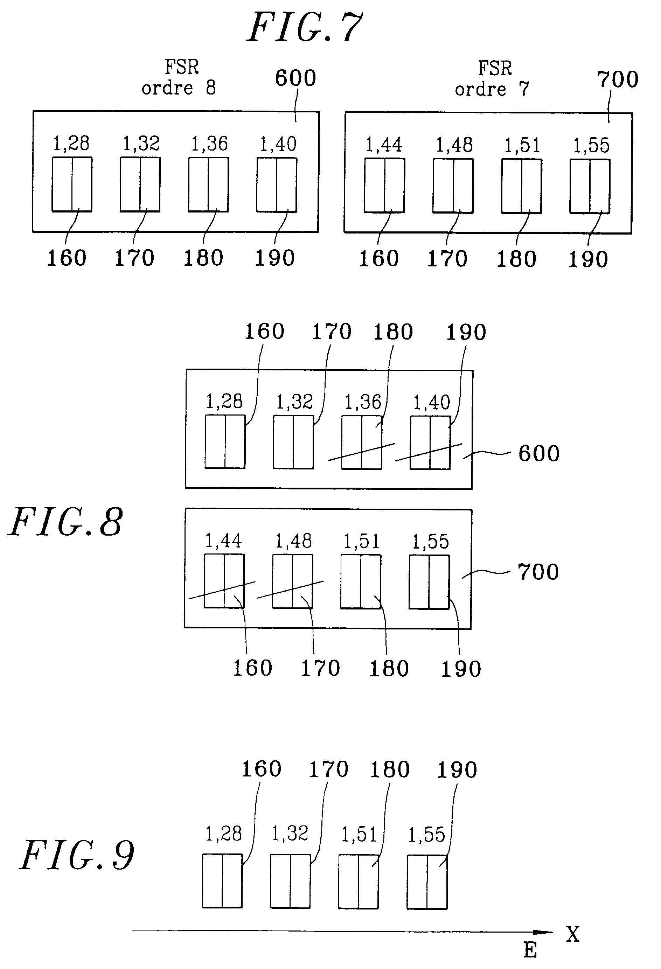

Sur la figure 6, les canaux 130, 140 et 150 sont placés sur un axe X avec un écartement entre eux qui est proportionnel à leur écartement véritable au sein du coupleur de sortie 120. Comme on peut le constater sur la figure 6, il existe entre les canaux 140 et 150, un écartement sensiblement égal à l'écartement existant entre les canaux 140 et 130.

Selon une variante de l'invention représentée sur les figures 7 à 9, on peut adopter quatre canaux de sortie pour le coupleur de sortie 120. On adopte encore dans cette variante une répartition des longueurs des guides d'onde du réseau permettant d'obtenir deux intervalles spectraux libres 600 et 700 dans le coupleur de sortie 120. Dans cette variante, les canaux de sortie sont référencés 160, 170, 180, 190. De la même façon que dans l'exemple de réalisation précédent, les deux intervalles spectraux libres 600 et 700 ont des longueurs d'onde centrales qui sont respectivement proches de 1,3 μm et de 1,5 μm.

Les canaux 160 et 170 sont placés dans le coupleur de sortie 120 en connaissant la longueur d'onde centrale exacte du premier intervalle spectral libre 600, cette longueur d'onde centrale étant proche de 1,3 μm. Connaissant cette longueur d'onde centrale, le canal 160 est espacé du centre du coupleur 120 d'une distance correspondant à la différence de longueurs d'onde entre 1,28 μm et la longueur d'onde centrale du premier intervalle spectral libre 600. De même, le canal 170 est placé à une distance du centre du coupleur 120 qui correspond à la différence entre 1,32 μm et la longueur d'onde centrale du premier intervalle spectral libre.

De la même façon, les canaux 180 et 190 sont placés en sortie du coupleur de sortie 120 à une distance du centre du coupleur de sortie 120 qui est déterminée en fonction de la connaissance de la longueur d'onde centrale du deuxième intervalle spectral libre 700, de façon à ce que ces canaux reçoivent des longueurs d'onde égales respectivement à 1,51 μm et 1,55 μm.

Comme on peut constater sur la figure 7, après un tel placement des canaux de sortie, les canaux 160 et 170 sont aptes à recevoir, dans le deuxième intervalle libre 700 cette fois, des longueurs d'onde respectives de 1,44 μm et 1,48 μm. Les longueurs d'onde 1,44 et 1,48 μm ne prenant pas place dans le dispositif, elles ne sont pas transmises dans ces canaux 160 et 170 et ont donc été rayés d'un trait transversal sur la figure 8.

De la même façon, les canaux 180 et 190 sont aptes à recevoir, dans le premier intervalle spectral libre 600, des longueurs d'onde de 1,36 et 1,40 μm, mais ne transmettent pas ces longueurs d'onde, du fait que les signaux transmis à travers la fibre optique 200 ne contiennent pas de signaux à ces longueurs d'onde.

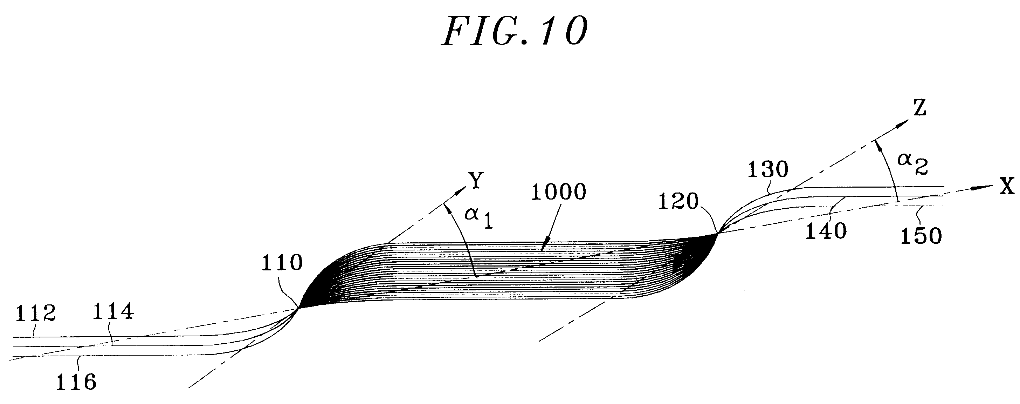

On a représenté sur la figure 9, les quatre canaux 160, 170, 180, 190 le long d'un axe X représentatif du positionnement des canaux dans le coupleur de sortie. L'écartement entre ces canaux sur la figure 9 étant proportionnel à l'écartement réel entre ces canaux en sortie du coupleur de sortie, on peut constater sur la figure 9 qu'à chaque fois deux canaux consécutifs présentent un écartement sensiblement identique.

Le phasar selon l'invention est en pratique apte à transmettre sur chaque canal 160, 170, 180, 190 des signaux de longueur d'onde appartenant à une plage étroite de longueurs d'onde entourant la longueur d'onde choisie pour ce canal. Le fait de placer deux canaux 180, 190 de façon à ce que l'un transmette des signaux autour de 1,51 μm, et l'autre transmette des signaux autour de 1,55 μm, permet de transmettre sur l'ensemble de ces deux canaux 180 et 190 tous les signaux de longueur d'onde située aux alentours de 1,54 μm, et plus précisément appartenant à une fenêtre couvrant au moins la plage 1,51 - 1,55 μm .

On a ici choisi deux canaux 180, 190 de longueurs d'onde respectives espacées de 40 nm. On aurait pu également choisir, par exemple, deux canaux espacés de 20 nm.

Le fait de couvrir de façon large une fenêtre s'étendant autour de 1,54 μm est particulièrement utile dans le cas où le phasar 100 est relié à un récepteur 300 par les deux canaux 180 et 190, et où le phasar sépare et transmet à ce récepteur 300, à travers ces deux canaux 180 et 190, un signal multicanal, c'est à dire un signal composé de plusieurs signaux ayant des longueurs d'onde différentes comprises dans la fenêtre autour de 1,54 μm. Ainsi, le signal séparé par le phasar 100 peut contenir à la fois un signal télévisuel et un signal porteur de données informatiques.

On pourra alors prévoir en tant que récepteur 300, ou en aval de celui-ci, un dispositif séparateur de type phasar par exemple.

De manière générale, on comprend que l'intérêt de travailler sur deux ordres différents, par exemple l'ordre 8 pour les canaux autour de 1,3 μm et l'ordre 7 pour les canaux autour de 1,54 μm, permet de rassembler deux zones de longueurs d'onde appartenant à la zone d'expansion du coupleur de sortie, qui sont bien séparées, sur trois guides proches les uns des autres.

Plus précisément, un canal de sortie est constitué d'un ruban épitaxié d'une largeur de 2 μm. Une technique de photolithographie conventionnelle permet d'obtenir une séparation transversale minimale entre deux bords adjacents de guides consécutifs qui est égale à 0,85 μm. Ainsi, une séparation spatiale transversale minimale entre des axes centraux de deux canaux de sortie, est égale à deux fois une demi largeur d'un guide additionnée à la valeur de la séparation minimale entre bords de guides, c'est à dire 2,85 μm.

Les canaux correspondant aux longueurs d'onde 1,28 et 1,32 μm étant ainsi séparés de 2,85 μm, il serait nécessaire, dans un coupleur classique, pour obtenir une longueur d'onde de 1,54 μm sur un troisième canal, de placer ce troisième canal à une distance du canal à 1,32 μm qui serait égal à 15,675 μm. En effet, le rapport de 2,85/15,675 est égal au rapport des différences entre longueurs d'onde (1,32-1,28)/(1,54-1,32).

Dans le cas de la présente invention, il n'est pas nécessaire de respecter entre les canaux des écartements proportionnels à la différence entre les longueurs d'onde de ces canaux. Le fait de placer le canal à 1,54 μm par rapport au centre d'un intervalle spectral qui est différent de l'intervalle spectral correspondant aux deux premiers canaux, permet de placer ce troisième canal à une distance du canal à 1,32 μm, qui est égale à 2,933 μm.

En pratique, le phasar 100 des figures 1, 4, 5 et 6, comporte un coupleur de sortie 120 dont les canaux de sortie sont positionnés, par rapport au centre du coupleur, à des distances algébriques de -1,425 μm, 1,425 μm et 4,358 μm, respectivement pour les canaux à 1,28 μm, 1,32 μm et 1,54 μm. Ces positionnements sont déterminés en considérant que la lumière entre et sort du coupleur 110 par un canal d'entrée positionné au centre de ce coupleur 110.

Ces positionnements sont également déterminés pour un phasar 100 dont les principaux paramètres sont une focale des zones d'expansion de 80 μm, une différence de longueurs entre guides consécutifs du réseau de 3,206 μm, le nombre de guides étant de 20.

On décrira maintenant comment déterminer une différence de longueur entre guides consécutifs du réseau de manière à obtenir deux intervalles spectraux libres dans le coupleur de sortie, ces deux intervalles spectraux ayant chacun une longueur d'onde centrale choisie.

De manière connue, un ordre d'interférence m d'un phasar est lié à la longueur d'onde centrale λ de l'intervalle spectral libre correspondant à cet ordre m, c'est à dire à la longueur d'onde $\lambda$ des signaux transmis au centre dudit coupleur de sortie, par l'équation $m.\lambda = n.DI$ où n est un indice de réfraction des guides du réseau du phasar et DI est une différence de longueur constante entre deux guides consécutifs du réseau. Ainsi, pour obtenir deux intervalles spectraux libres dans la zone d'expansion du coupleur de sortie 120, il faut choisir une valeur DI qui vérifie les deux équations suivantes : $M_1.\lambda_1 = n.DI$ et $m_2.\lambda_2 = nDI$, où $\lambda_1$ et $\lambda_2$ sont des longueurs d'onde centrales souhaitées pour les deux intervalles spectraux libres prenant place dans le coupleur de sortie, et où $m_1$ et $m_2$ sont deux ordres d'interférence différents, c'est à dire deux nombres entiers différents.

Ainsi, $m_1$, $m_2$, $\lambda_1$ et $\lambda_2$ doivent vérifier l'équation : $n_1\lambda_1 = m_2\lambda_2$, $\lambda_1$ et $\lambda_2$ devant être proches respectivement de 1,3 et 1,5 $\mu$m. L'équation $n_1/m_2 = \lambda_2/\lambda_1$ doit donc être vérifiée de sorte que $m_1/m_2$ doit être proche de 1,5/1,3.

Un rapport de nombres entiers proche de cette valeur est 8/7. Ainsi, on adopte deux ordres d'interférence : l'ordre 8 pour $m_1$ et l'ordre 7 pour $m_2$. On peut alors choisir deux longueurs d'onde centrales $\lambda_1$ et $\lambda_2$ vérifiant $\lambda_2/\lambda_1 = 8/7$, et vérifiant que $\lambda_2$ soit proche de 1,5 $\mu$m et $\lambda_1$ soit proche de 1,3 $\mu$m.

Une fois ces deux longueurs d'onde choisies, et connaissant la valeur de l'indice de réfraction n, l'égalité $m_1\lambda_1 = n.DI$, ou l'égalité $m_2\lambda_2 = n.DI$, permet de déterminer la différence de longueurs DI entre deux guides consécutifs du réseau qui permet d'obtenir ces deux longueurs d'onde centrales $\lambda_1$ et $\lambda_2$.

Nous obtenons dans notre cas, une valeur de DI égale à 3,2 $\mu$m. Bien entendu, il est possible d'adopter d'autres ordres d'interférence permettant également d'obtenir un rapport $\lambda_2/\lambda_1$ compatible avec des valeurs de $\lambda_2$ et de $\lambda_1$ proches de 1,5 et 1,3 respectivement. Ainsi, il est possible d'adopter des ordres d'interférence inférieurs. Dans ce cas, l'intervalle spectral libre obtenu pour chacun de ces ordres est plus large en longueur d'onde, ce qui concourt à augmenter des focales de zones d'expansion et donc à augmenter la taille du dispositif.

De manière connue, le fait de placer un grand nombre de guides dans le réseau permet d'obtenir en sortie du phasar une diaphotie élevée.

Une méthode connue pour obtenir une bonne diaphotie est d'adopter une différence de longueur entre deux guides consécutifs du réseau qui soit faible. Ceci équivaut à adopter des ordres d'interférence faibles. Ainsi, on peut, dans le cas d'un phasar classique, adopter, par exemple, un ordre d'interférence égal à 2 pour rejeter des lobes additionnels adjacents, à l'extérieur d'une zone de longueur d'onde du coupleur de sortie en augmentant une largeur en longueur d'onde des canaux.

De tels lobes adjacents apparaissent dans le coupleur de sortie pour des ordres supérieurs.

Dans le cas d'un phasar adapté pour séparer des signaux ayant des longueurs d'onde non uniformément réparties, telles que 1,28, 1,32 et 1,54 $\mu$m, il est nécessaire d'obtenir une diaphotie de particulièrement bonne qualité, et les ordres sont imposés par le choix des longueurs d'onde centrales des intervalles spectraux libres.

Il est donc nécessaire d'améliorer la diaphotie en plaçant un nombre de guides particulièrement élevé dans le réseau de guides.

Adopter un grand nombre de guides permet, bien que les lobes secondaires adjacents soient conservés dans l'intervalle spectral libre, de réduire la taille de ces lobes secondaires.

L'invention propose une disposition géométrique du réseau du phasar permettant d'adopter un nombre particulièrement élevé de guides dans le réseau.

Bien entendu, le cadre de l'invention ne se limite pas au cas où seule une diaphotie de bonne qualité est nécessaire. Une telle disposition des guides du réseau s'avère particulièrement adaptée à chaque fois qu'il est nécessaire ou avantageux d'adopter un grand nombre de guides dans le réseau, ou de placer des guides selon une disposition ayant un encombrement particulièrement faible. Un phasar selon l'invention s'avère également particulièrement avantageux lorsqu'il est nécessaire de réaliser un réseau de guides présentant une différence de longueur entre guides consécutifs qui soit particulièrement faible, et constante.

On a représenté sur la figure 10 un phasar selon l'invention, qui correspond à celui de la figure 1. Le coupleur d'entrée 110 comporte trois canaux d'entrée 112, 114 et 116, et le coupleur de sortie 120 comporte trois canaux de sortie 130, 140 et 150. Ces trois entrées sont séparées de ces trois sorties, par deux zones d'expansion libre jouant le rôle de lentilles, et un réseau de guides 1000. Seul le guide d'entrée 114 est utilisé dans l'application décrite ici.

Dans une variante de l'invention, on propose un phasar dont les coupleurs, également symétriques l'un à l'autre, comportent respectivement cinq canaux d'entrée et cinq canaux de sortie. Ainsi, si un des guides est rendu inutilisable, un autre guide peut être utilisé en remplacement de ce guide inutilisable.

Comme on peut le constater sur la figure 10, le réseau 1000 présente une forme ondulée.

On définit un axe général X comme un axe passant par les centres respectifs des coupleurs 110 et 120, et on définit deux directions principales des guides du réseau 1000 au voisinage respectivement des coupleurs 110 et 120.

Ces directions principales sont définies de la façon suivante. En considérant des tangentes aux guides du réseau 1000 au niveau de points de ces guides où ils sont raccordés à un coupleur donné, on trace une direction moyenne de ces tangentes. La direction principale des guides au niveau du coupleur considéré est définie comme étant la direction moyenne de ces tangentes.

Sur la figure 10, on a tracé deux axes Y et Z correspondant aux orientations des directions principales de ces guides au niveau respectivement des coupleurs 110 et 120.

On a également défini sur la figure 10 un sens positif sur l'axe X. Ce sens positif est défini par une flèche dirigée du coupleur 110 vers le coupleur 120.

Sur chacun des axes Y et Z, on définit un sens positif de la façon suivante. Le coupleur 110 étant défini arbitrairement comme étant le coupleur d'entrée, le coupleur 120 étant défini alors comme le coupleur de sortie, le sens positif de l'axe Y du coupleur d'entrée 110 est défini comme étant le sens de départ des guides de ce coupleur d'entrée 110. Inversement, le sens positif de l'axe Z du coupleur de sortie 120 est défini comme le sens d'arrivée des guides sur le coupleur de sortie 120.

On peut alors définir deux angles $\alpha_1$ et $\alpha_2$ algébriques. L'angle $\alpha_1$, est l'angle algébrique orienté, défini selon les règles mathématiques usuelles, partant de l'axe général orienté X et allant jusqu'à l'axe orienté Y. De la même façon, l'angle $\alpha_2$ est l'angle algébrique orienté, partant de l'axe orienté X et allant jusqu'à l'axe orienté Z.

On peut constater sur la figure 10 que les angles $\alpha_1$ et $\alpha_2$ sont de même signe. En d'autres termes, les guides du réseau émergent du coupleur 110 selon une direction générale Y orientée allant vers le haut de la figure 10 et les guides du réseau émergent du coupleur de sortie 120 selon une direction allant vers le bas. Les coupleurs 110 et 120 sont donc inclinés l'un vers le haut et l'autre vers le bas.

Les guides, après émergence du coupleur 110, décrivent une première courbure de sorte que leurs tangentes passent d'une inclinaison montante à une direction horizontale au niveau d'une partie centrale du réseau. En partie centrale du réseau, les guides sont rectilignes et parallèles entre eux. En arrivant à proximité du coupleur 120, les guides du réseau décrivent à nouveau une courbure, cette fois une courbure de sens opposé à la première courbure, les faisant passer d'une orientation horizontale vers à nouveau une orientation montante.

Ainsi, chaque guide du réseau 1000 décrit une forme de S et la géométrie du dispositif est inchangée par une rotation du dispositif de 180° autour d'un axe central du dispositif. Plus précisément, chaque guide du réseau 1000 décrit un premier virage ayant un premier sens de courbure, puis un tronçon rectiligne, et enfin un second virage ayant un second sens de courbure opposé au premier sens de courbure.

Chaque guide du réseau 1000 décrit un virage de courbure élevée et un virage de courbure faible. En effet, les guides du réseau disposés en position basse sur la figure 10 sont à l'intérieur du premier virage du réseau et à l'extérieur du second virage. Ils présentent donc une faible courbure dans le premier virage, et une courbure forte dans le second virage. A l'inverse, les guides disposés en position supérieure du réseau décrivent le premier virage à l'extérieur de celui-ci et le second virage à l'intérieur de celui-ci.

Une telle disposition du réseau, et en particulier des coupleurs, permet d'une part de placer un très grand nombre de guides dans le réseau, d'autre part de pouvoir adopter des différences de longueurs particulièrement faibles entre les guides. Une disposition avec des coupleurs inclinés par rapport à l'axe général X selon des angles respectifs $\alpha_1$, et $\alpha_2$ égaux permet ainsi de disposer un nombre particulièrement important de guides ayant une même longueur.

Dans les dispositions de réseaux connues jusqu'à présent, les coupleurs présentent des directions principales confondues, ou des directions principales inclinées par rapport à un axe général du réseau selon des angles $\alpha_1$ et $\alpha_2$, définis de même manière que précédemment, qui ont des signes opposés.

Dans de telles configurations, une différence de longueur entre deux guides consécutifs du réseau impose, aussi petite que soit cette différence de longueur, un espacement transversal entre deux guides du réseau au niveau du centre du réseau, qui est souvent beaucoup plus important qu'une séparation transversale minimale pouvant être technologiquement réalisée.

Grâce à la disposition précédemment décrite, il est possible de placer les guides du réseau selon un écartement transversal entre deux guides consécutifs, qui soit particulièrement réduit, voire minimal.

Dans une disposition conforme à celle de la figure 10, une faible différence entre les deux angles $\alpha_1$ et $\alpha_2$, par exemple un angle $\alpha_2$ légèrement supérieur à l'angle $\alpha_1$, permet d'obtenir un réseau de guides dans lequel les guides sont d'autant plus longs qu'ils sont en position inférieure dans le réseau. Tout en gardant un espace transversal entre deux guides du réseau qui soit particulièrement faible, et avec un nombre de guides particulièrement élévé, à chaque différence de longueur DI entre guides consécutifs correspond une différence $(\alpha_2 - \alpha_1)$ permettant d'obtenir cette différence de longueur DI.

Par ailleurs, l'espacement transversal entre deux guides du réseau pouvant être choisi particulièrement faible, le phasar 100 selon l'invention peut comporter un grand nombre de guides dans ce réseau sans présenter un volume transversal trop important en partie centrale du réseau.

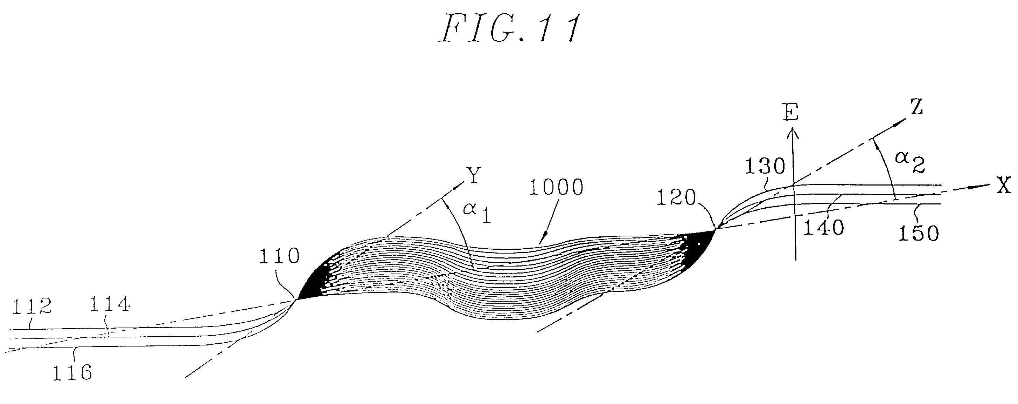

On a représenté, sur la figure 11, une variante du phasar 100 selon l'invention, dans laquelle les guides du réseau 1000 présentent en outre une courbure supplémentaire en partie centrale du réseau. Plus précisément, chaque guide présente, en plus du premier virage au voisinage du coupleur 110 et en plus du virage au voisinage du coupleur 120, un virage supplémentaire en partie centrale du réseau, ce virage ayant un même sens de courbure pour chaque guide du réseau 1000.

Dans la disposition de la figure 11, les guides du réseau 1000 émergent de chacun des deux coupleurs 110 et 120 et s'écartent les uns des autres jusqu'à une zone située approximativement à chaque fois au tiers de la longueur des guides.

Dans le virage central, les guides présentent une courbure d'autant plus forte qu'ils sont à l'extérieur du virage central. Ainsi, les guides les plus longs du réseau sont les guides extérieurs du virage central.

Les dispositions décrites précédemment permettent d'adopter un grand nombre de guides dans le réseau, présentant entre eux une différence de longueur faible, par exemple de 3,2 μm. Ainsi, on obtient une diaphotie entre deux canaux de sortie qui est de très bonne qualité.

Dans les phasars proposés jusqu'à présent, on recourt à des ordres d'interférence faibles, par exemple un ordre 2, pour obtenir des diaphoties satisfaisantes. De tels dispositifs ne permettent pas de séparer deux canaux ayant des longueurs d'onde proches, comme des canaux à 1,28 μm et 1,32 μm, car les canaux de sortie ont, avec les ordres faibles, des largeurs en longueur d'onde qui sont particulièrement importantes, typiquement des largeurs de 100 nm à 5 dB.

Dans le cas de la figure 11, tout comme dans le cas de la figure 10, pour un guide choisi du réseau 1000, un premier virage court au niveau du coupleur 110 compense un virage long au niveau du coupleur 120, ou inversement un virage long au niveau du coupleur 110 compense un virage court au niveau du coupleur 120. Ce type de géométrie permet de disposer un grand nombre de guides dans le réseau, par exemple 44 guides sans chevauchement de ces guides.

Par ailleurs, sur la figure 11, on a représenté une flèche E indiquant le sens d'augmentation des longueurs d'onde transmises au sein des canaux 130, 140 et 150. La longueur d'onde transmise par un canal de sortie est d'autant plus grande que ce canal se situe du côté de l'intérieur du virage central du réseau 1000.

Dans le cas des figures 10 et 11, le réseau 1000 présente une longueur, mesurée entre les deux coupleurs 110 et 120, égale à 4000 μm.

Les réseaux des dispositifs de ces deux figures, présentent une largeur transversale égale à 900 μm.

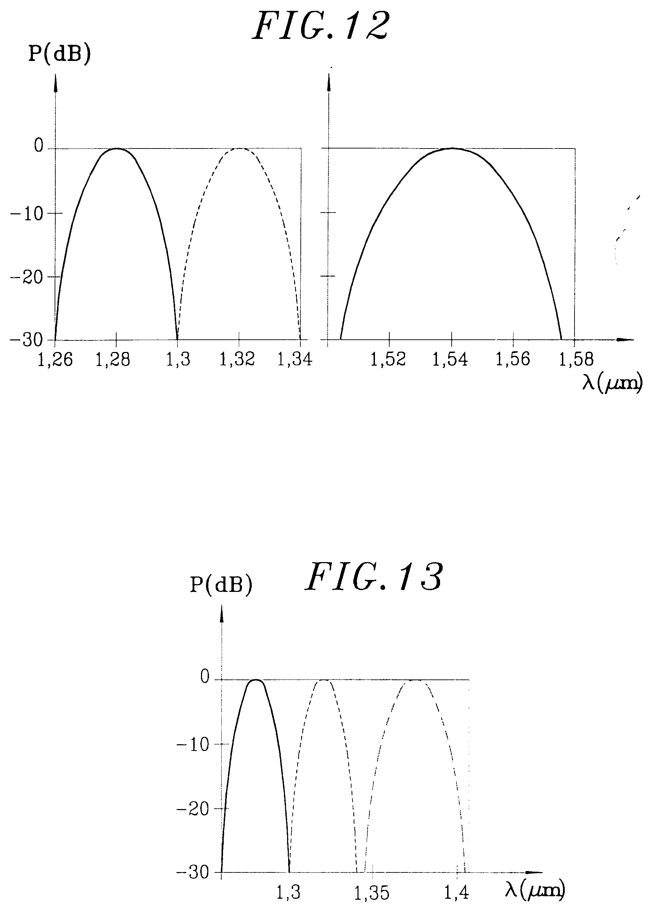

On a représenté sur la figure 12 des puissances P détectées sur les canaux de sortie du coupleur de sortie, pour la seconde variante de l'invention décrite en rapport aux figures 7 à 9. La figure 12 est un graphique sur lequel sont rapportées en abscisse les longueurs d'onde λ, en μm, et en ordonnées les puissances P transmises en aval du phasar, en dB.

Comme on peut le constater sur la figure 12, on obtient sur les canaux à 1,28 et 1,32 μm, une largeur de raie de 12 nm à 3 dB, et, pour l'ensemble des deux canaux à 1,51 et à 1,55 μm, une même raie de largeur à 3dB égale à 21 nm. Cette même raie est constituée de deux raies suffisamment proches pour ne pas présenter de séparation entre elles.

Le phasar 100 selon l'invention présente une dépendance à la polarisation de la lumière qui est inférieure à 2,5 nm sur chaque canal.

La figure 13 est également un graphique présentant l'évolution de la puissance P détectée par les canaux de sortie du phasar des figures 7 à 9, en fonction d'une longueur d'onde λ.

La figure 13 diffère de la figure 12 par le fait qu'une portion de courbe correspondant à la puissance détectée par les canaux 180 et 190 a été décalée d'un intervalle spectral libre pour une comparaison plus facile avec deux courbes représentant les puissances détectées par les canaux 160 et 170.

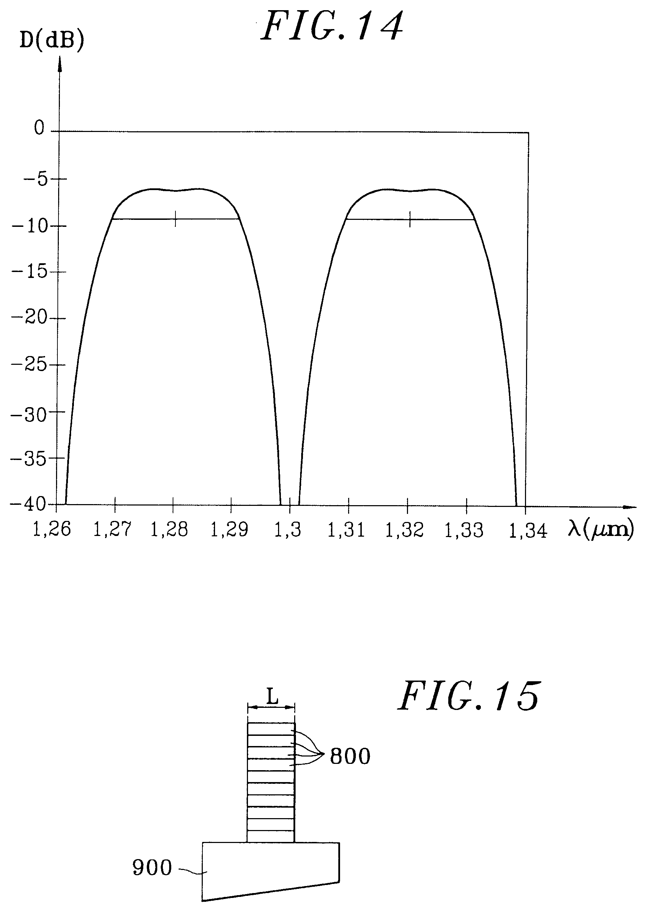

La figure 14 représente l'évolution de la diaphotie, ou Crosstalk selon la terminologie anglophone, en dB, en fonction d'une longueur d'onde λ. Cette diaphotie est meilleure que -20dB.

On décrira maintenant une structure de couches épitaxiées, permettant de réaliser ce dispositif, en référence à la figure 15. Cette structure est réalisée sur un substrat d'InP semi-isolant 900, en déposant par épitaxie, plusieurs fois les uns sur les autres, des ensembles identiques 800 composés chacun de deux couches, l'une d'InP ayant une épaisseur de 500 Å et l'autre de InGaAsP ayant une épaisseur de 500 Å et de longueur d'onde de bande interdite de 1,17 μm. Cet ensemble 800 de deux couches est par exemple répété dix fois. Une fois réalisé cet empilement, on réalise une gravure ionique réactive à partir d'une couche supérieure de l'empilement et jusqu'au substrat 900, de manière à donner à l'empilement, en vue de dessus, une forme de ruban ayant une largeur L qui est dans cet exemple de 2 μm. Sur la figure 15, un ensemble de deux couches, l'une d'InP, l'autre d'InGaAsP est représenté à chaque fois par un unique rectangle 800.

Ces couches ont une structure choisie de manière à pouvoir guider des ondes optiques, aussi bien à une longueur d'onde de 1,3 μm qu'à une longueur d'onde de 1,5 μm. Ces couches ont également une structure leur permettant d'avoir le même comportement à ces longueurs d'onde, quelle que soit la polarisation de la lumière.

On réalise un ruban conforme à celui de la figure 15 en mettant en oeuvre une unique gravure ionique réactive de ces couches, à base d'un mélange de méthane et d'hydrogène.

Pour toute différence de longueur entre guides choisie, qui peut être aussi faible que souhaitée, on peut obtenir cette différence de longueur en donnant aux guides, constitués par exemple chacun par un empilement conforme à celui de la figure 15, une courbure supplémentaire appropriée en partie centrale du réseau. Un tel procédé de réalisation permet d'obtenir des différences de longueurs entre guides consécutifs particulièrement faibles, impossibles à obtenir avec les procédés connus jusqu'à présent.

Le phasar selon l'invention peut être réalisé en mettant en oeuvre des procédés de compensation de polarisation, c'est à dire des procédés permettant de réduire ou de rendre négligeable une séparation entre des modes TE et TM, cette séparation étant de manière classique de 2,5 nm.

Un tel procédé est décrit dans la demande de brevet FR 95 04031. Ce procédé nécessite deux structures de couches, de biréfringences différentes.

On peut également réaliser un phasar présentant une réponse en longueur d'onde élargie. Un tel phasar peut ainsi être réalisé dans le cadre de l'invention, conformément aux dispositions décrites dans la demande de brevet FR 96 11601.

Une plus grande largeur de réponse en longueur d'onde permet une meilleure tolérance en fonction à la fois de variations de température et en fonction de la polarisation. Des valeurs de largeur de fenêtres supérieures à 22 nm à 3dB pour la fenêtre à 1,3 $\mu$m et supérieures à 38 nm à 3dB pour la fenêtre à 1,54 $\mu$m, peuvent être obtenues. Elles sont près de deux fois supérieures aux largeurs obtenues avec des démultiplexeurs classiques.

Une largeur importante de réponse spectrale est avantageuse, notamment pour couvrir toute la fenêtre à 1,54 $\mu$m, c'est à dire des longueurs d'onde se répartissant de 1,52 $\mu$m à 1,56 $\mu$m. Avec deux canaux, l'un à 1,535 $\mu$m et l'autre à 1,55 $\mu$m, une telle fenêtre allant de 1,52 à 1,56 $\mu$m est totalement couverte.

## Revendications

1. Dispositif d'échange de signaux optiques à travers une fibre optique (200), comportant un composant optique (100) du type à spectrographe à réseau (1000) de guides d'onde ayant deux coupleurs entre lesquels ledit réseau s'étend et des canaux s'étendant depuis les coupleurs vers l'extérieur du composant, ce dispositif comportant également un émetteur (400) et un récepteur (500) de signaux optiques, un canal d'un des coupleurs du composant optique étant relié à la fibre optique (200), un premier (150) et un second (140) canal de l'autre coupleur (120) du composant optique étant reliés respectivement à une entrée du récepteur (500) et à une sortie de l'émetteur (400), caractérisé en ce que ledit autre coupleur (120) comporte un troisième canal (130) relié à un port d'un autre composant optique (300) du dispositif.

2. Dispositif selon la revendication 1, caractérisé en ce que le troisième canal est relié à une entrée d'un deuxième récepteur (300).

3. Dispositif selon la revendication 1, caractérisé en ce que le troisième canal est relié à une sortie d'un deuxième émetteur.

4. Dispositif selon l'une des revendications précédentes, caractérisé en ce que le composant optique (100) du type à spectrographe à réseau est apte à échanger avec le récepteur (500) et l'émetteur (400) reliés respectivement au premier (150)et au second canal (140) des signaux optiques de longueurs d'onde égales à 1,28 et 1,32 $\mu$m, et à échanger avec l'autre composant optique (300) des signaux optiques de longueurs d'onde comprises entre 1,52 $\mu$m et 1,56 $\mu$m.

5. Dispositif selon l'une quelconque des revendications précédentes, caractérisé en ce que le récepteur (500) et l'émetteur (400) reliés respectivement au premier (150) et au second canal (140) appartiennent à un terminal de communications bidirectionnelles.

6. Dispositif selon l'une quelconque des revendications précédentes, caractérisé en ce que le composant optique (100) du type à spectrographe à réseau et l'autre composant optique (300) sont aptes à échanger un signal composé de plusieurs signaux de longueurs d'onde différentes.

7. Dispositif selon l'une quelconque des revendications précédentes, caractérisé en ce que le composant optique (100) du type à spectrographe à réseau est relié à l'un des récepteurs (300,500) ou l'un des émetteurs (400), par deux canaux (180, 190), ces deux canaux (180, 190) étant disposés de façon à pouvoir transmettre deux plages de longueurs d'onde qui ne présentent pas de séparation entre elles.

8. Dispositif selon l'une des revendications précédentes, caractérisé en ce que le composant optique du type à spectrographe à réseau (100) présente une répartition des longueurs des guides de son réseau (1000) choisie de façon à ce que deux intervalles spectraux libres (600, 700) de longueurs d'onde centrales ($\lambda_1$, $\lambda_2$) différentes prennent place dans le dit autre coupleur (120).

9. Dispositif selon la revendication précédente, caractérisé en ce que les longueurs d'onde centrales ($\lambda_1$, $\lambda_2$) sont choisies suffisamment proches de longueurs d'onde émises ou reçues par les émetteurs (400) et les récepteurs (300, 500) de sorte que les canaux (130, 140, 150) reliant ces émetteurs (400) et ces récepteurs (300, 500) audit autre coupleur soient regroupés en partie centrale dudit autre coupleur (120).

10. Dispositif selon l'une des revendications précédentes, caractérisé en ce que le réseau (1000) de guides présente une différence de longueurs entre guides qui est constante (DI) sur au moins une partie du réseau, choisie de façon à obtenir deux

ordres d'interférence ($m_1$, $m_2$) dans le dit autre coupleur (120).

11. Dispositif selon l'une des revendications précédentes, caractérisé en ce que, le composant optique à spectrographe à réseau (100) présentant une première direction moyenne orientée (Y) de départ des guides du réseau à partir dudit un des coupleurs (110), et une seconde direction moyenne orientée (Z) d'arrivée des guides du réseau (1000) sur ledit autre coupleur (120), un axe général (X) étant défini comme un axe passant par des centres de chaque coupleur (110, 120), et sur lequel un unique sens positif est défini, la première et la seconde direction orientées (Y, Z) présentent chacune un angle orienté ($\alpha_1$, $\alpha_2$) mesuré algébriquement à partir de l'axe général (X) orienté, qui est de même signe.

12. Dispositif selon la revendication précédente, caractérisé en ce que les angles orientés mesurés algébriquement à partir de l'axe général (X) orienté, respectivement ($\alpha_1$, $\alpha_2$), de la première et de la seconde direction (Y, Z) ont une même valeur.

13. Dispositif selon l'une des revendications 11 ou 12, caractérisé en ce que les guides décrivent un premier virage ayant un premier sens de courbure au départ dudit un des coupleurs (110), et un dernier virage en arrivant sur ledit autre coupleur (120), ce dernier virage ayant un sens de courbure opposé au premier sens de courbure, et un virage supplémentaire entre ce premier et ce dernier virage.

## FIG.1

$1,54\mu m$ +
$1,28\mu m$

$1,32\mu m$

200

110

120

100

130

300

$1,54\mu m$

140

400

$1,32\mu m$

$1,28\mu m$

150

500

## FIG.2

$1,28\mu m$

$1,32\mu m$

F

$1,54\mu m$

## FIG.3

150

140

$1,28\mu m$

$1,32\mu m$

$1,54\mu m$

130

## *FIG.4*

FSR
ordre 8   600

FSR
ordre 7   700

1,28   1,32   1,39

1,44   1,48   1,54

150   140   130

150   140   130

## *FIG.5*

150   140   130

1,28   1,32   1,39

600

1,44   1,48   1,54

700

150   140   130

## *FIG.6*

150   140   130

1,28   1,32   1,54

E   →   X

## FIG.7

FSR
ordre 8　　600

| 1,28 | 1,32 | 1,36 | 1,40 |

160　　170　　180　　190

FSR
ordre 7　　700

| 1,44 | 1,48 | 1,51 | 1,55 |

160　　170　　180　　190

## FIG.8

160　　170　　180　　190

| 1,28 | 1,32 | 1,36 | 1,40 |

600

| 1,44 | 1,48 | 1,51 | 1,55 |

700

160　　170　　180　　190

## FIG.9

160　　170　　180　　190

| 1,28 | 1,32 | 1,51 | 1,55 |

X

E

# FIG.10

EP 0 921 424 A1

FIG.11

## FIG.12

## FIG.13

## *FIG.14*

## *FIG.15*

# EP 0 921 424 A1

**Office européen des brevets**

# RAPPORT DE RECHERCHE EUROPEENNE

Numéro de la demande

EP 98 40 3079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 703 473 A (FRANCE TELECOM) 27 mars 1996<br>* figures 1,2 *<br>* page 4, ligne 1 - ligne 58 * | 1,2,6 | G02B6/293<br>G02B6/124<br>H04B10/24 |
| A | EP 0 651 530 A (AT & T CORP) 3 mai 1995<br>* figures 1-6 *<br>* colonne 3 - colonne 6 *<br>* colonne 7, ligne 1 - ligne 28 * | 1,2,6 | |
| A | MESTRIC R ET AL: "DESIGN AND FABRICATION OF 1.31-1.55-MUM PHASED-ARRAY DUPLEXER ON INP"<br>IEEE JOURNAL OF SELECTED TOPICS IN QUANTUM ELECTRONICS,<br>vol. 2, no. 2, juin 1996, pages 251-256,<br>XP000685237<br>* le document en entier * | 1,4,5 | |
| A | AMERSFOORT M R ET AL: "HIGH PERFORMANCE 4-CHANNEL PHASAR WAVELENGTH DEMULTIPLEXER INTEGRATED WITH PHOTODETECTORS"<br>PROCEEDINGS OF THE EUROPEAN CONFERENCE ON OPTICAL COMMUNICATION (EC, MONTREUX, SEPT. 12 - 16, 1993,<br>vol. VOL. 3, no. CONF. 19,<br>12 septembre 1993, pages 49-52,<br>XP000492285<br>SWISS ELECTROTECHNICAL ASSOCIATION<br>* le document en entier * | 1,6 | **DOMAINES TECHNIQUES RECHERCHES (Int.Cl.6)**<br><br>G02B<br>H04B |
| A | "WAVELENGTH LOCKING SCHEME USING A GRATING DEMULTIPLEXER FOR APPLICATIONS IN WDMA NETWORKS AND WDM LINKS"<br>IBM TECHNICAL DISCLOSURE BULLETIN,<br>vol. 38, no. 5, 1 mai 1995, pages 413-415,<br>XP000519628<br>* le document en entier * | 1,10 | |

-/--

Le présent rapport a été établi pour toutes les revendications

| Lieu de la recherche | Date d'achèvement de la recherche | Examinateur |
|---|---|---|
| LA HAYE | 12 mars 1999 | Mathyssek, K |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

Office européen
des brevets

**RAPPORT DE RECHERCHE EUROPEENNE**

Numéro de la demande

EP 98 40 3079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 212 758 A (ADAR RENEN ET AL) 18 mai 1993 * le document en entier * | 1,11,12 | |

DOMAINES TECHNIQUES
RECHERCHES (Int.Cl.6)

Le présent rapport a été établi pour toutes les revendications

| Lieu de la recherche | Date d'achèvement de la recherche | Examinateur |
|---|---|---|
| LA HAYE | 12 mars 1999 | Mathyssek, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**EP 0 921 424 A1**

**ANNEXE AU RAPPORT DE RECHERCHE EUROPEENNE**
**RELATIF A LA DEMANDE DE BREVET EUROPEEN NO.**

EP 98 40 3079

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

12-03-1999

| Document brevet cité au rapport de recherche | | Date de publication | Membre(s) de la famille de brevet(s) | | Date de publication |
|---|---|---|---|---|---|
| EP 0703473 | A | 27-03-1996 | FR | 2725040 A | 29-03-1996 |
| | | | JP | 8171110 A | 02-07-1996 |
| | | | US | 5631768 A | 20-05-1997 |
| EP 0651530 | A | 03-05-1995 | US | 5483369 A | 09-01-1996 |
| | | | CA | 2129603 A | 04-05-1995 |
| | | | JP | 7240730 A | 12-09-1995 |
| US 5212758 | A | 18-05-1993 | DE | 69312369 D | 28-08-1997 |
| | | | DE | 69312369 T | 05-02-1998 |
| | | | EP | 0565308 A | 13-10-1993 |
| | | | JP | 2693354 B | 24-12-1997 |
| | | | JP | 6027339 A | 04-02-1994 |

EPO FORM P0460